# EUROPÄISCHE PATENTSCHRIFT

(11) **EP 2 976 485 B1**
(45) Veröffentlichungstag und Bekanntmachung des Hinweises auf die Patenterteilung: **21.11.2018**
(21) Anmeldenummer: 14708278.8
(22) Anmeldetag: 07.03.2014
(51) Int. Cl.: E21B 3/02

(54) **KRAFTDREHKOPF FÜR EIN BOHRGESTÄNGE**
TOP DRIVE FOR A DRILL STRING
TÊTE ROTATIVE D'ENTRAÎNEMENT POUR UN TRAIN DE TIGES

(30) Priorität: 19.03.2013 DE 102013102805
(43) Veröffentlichungstag der Anmeldung: 27.01.2016
(73) Patentinhaber: MHWirth GmbH, 41812 Erkelenz (DE)
(72) Erfinder: HEINRICHS, Albrecht, 41812 Erkelenz (DE); FELDERMANN, Achim, 52062 Aachen (DE); LEIER, Sebastian, 57392 Schmallenberg (DE); DOLLS, Thomas, 52525 Heinsberg (DE)
(74) Vertreter: Kluin, Jörg-Eden
(86) Internationale Anmeldenummer: PCT/EP2014/054420
(87) Internationale Veröffentlichungsnummer: WO 2014/146910

(56) Entgegenhaltungen:
- US-A1- 2005 269 104
- US-A1- 2007 163 784
- US-A1- 2009 159 271
- US-B1- 6 695 071

## Beschreibung

Die Erfindung betrifft einen Kraftdrehkopf für ein Bohrgestänge, mit einer ein Getriebegehäuse aufweisenden Getriebeeinheit, mit einer in der Getriebeeinheit um eine Drehachse drehbar gelagerten Hauptspindel, an die das Bohrgestänge ankoppelbar ist, wobei die Getriebeeinheit ein Axialhauptlager mit einem unteren Hauptlagerteil und einem relativ zum unteren Hauptlagerteil um die Drehachse drehbaren oberen Hauptlagerteil umfasst, wobei die Hauptspindel an dem oberen Hauptlagerteil und das untere Hauptlagerteil an dem Getriebegehäuse mittelbar oder unmittelbar anliegen, und wobei die Getriebeeinheit ein Axialhilfslager umfasst.

Ein diese Merkmale aufweisender Kraftdrehkopf ist aus der US 2005/0269104 A1 bekannt.

Derartige Kraftdrehköpfe, auch "Top Drive" genannt, dienen u. a. dem Drehantrieb und der Absenkung und Aufholung des Bohrgestänges. Hierzu ist das Bohrgestänge im Betrieb drehfest mit der Hauptspindel gekoppelt, üblicherweise durch eine Verschraubung. Der Kraftdrehkopf wird während des Betriebs mit Hilfe eines Führungsschlittens in einem Mast geführt. Über den Führungsschlitten werden im Betrieb Reaktionsmomente in den Mast eingeleitet.

Dem Absenken und Anheben des Kraftdrehkopfes und damit des Bohrgestänges dient üblicherweise eine Flaschenzuganordnung, die am oberen Ende des Mastes gehalten ist und beispielsweise über Hängebügel mit dem Kraftdrehkopf verbunden ist.

Zur Drehbetätigung der Hauptspindel ist die Getriebeeinheit mit mindestens einem elektrisch oder hydraulisch angetriebenen Rotationsmotor verbunden.

Aufgrund der festen Verbindung des Bohrgestänges mit der Hauptspindel werden an deren Lagerung im Getriebegehäuse der Getriebeeinheit des Kraftdrehkopfes hohe Anforderungen gestellt. Insbesondere muss für die Hauptspindel eine axiale Lagerung vorgesehen sein, die geeignet ist, die bei einem Bohrstrang mit einem Arbeitskopf vorhandene Masse in das Gehäuse einzuleiten. Darüber hinaus muss die Axiallagerung auch den während eines Bohrbetriebs auftretenden dynamischen Belastungen dauerhaft standhalten.

Bei einem Kraftdrehkopf bekannter Bauart umfasst die Axiallagerung der Hauptspindel ein Axialhauptlager. Es ist als Kegelrollenlager ausgebildet. Sein unteres Hauptlagerteil liegt an dem Gehäuse an, an seinem oberen Hauptlagerteil stützt sich die Hauptspindel mit einem Radialflansch ab.

Um eine hohe Lebensdauer der Axiallager zu erreichen, ist ein Spiel zwischen den Lagerrollen und den oberen und unteren Lagerteilen zu vermeiden. Hierzu ist in bekannten Kraftdrehköpfen eine Federeinheit vorgesehen, die das obere Hilfslagerteil auf die Wälzkörper drückt.

Es hat sich allerdings gezeigt, dass trotz dieser so bewirkten Vorspannung das Axialhauptlager einem unerwartet hohen Verschleiß insbesondere beim Bohren mit Andruck unterliegen kann. Hierbei werden die Federpakete zusammengedrückt. Das untere Lager erhält Lagerspiel. Dadurch ist nicht gewährleistet, dass die Rollen des Hauptlagers gleichmäßig abrollen.

Der Erfindung liegt daher die Aufgabe zugrunde, einen gattungsgemäßen Kraftdrehkopf derart weiterzubilden, dass der Verschleiß der Axiallager reduziert ist und er eine höhere Standzeit aufweist.

Diese Aufgabe wird durch den in Anspruch 1 wiedergegebenen Kraftdrehkopf gelöst und durch das in Anspruch 9 wiedergegebene Verfahren gelöst.

Bei dem erfindungsgemäßen Kraftdrehkopf umfasst das Axialhilfslager ein unteres Hilfslagerteil und ein relativ zum unteren Hilfslagerteil um die Drehachse drehbares oberes Hilfslagerteil, wobei das untere Hilfslagerteil an der Hauptspindel und das obere Hilfslagerteil mittelbar oder unmittelbar an dem Getriebegehäuse anliegt. Zwischen dem oberen Hilfslagerteil und dem Getriebegehäuse und/oder zwischen dem unteren Hilfslagerteil und der Hauptspindel und/oder zwischen dem unteren Hauptlagerteil und dem Getriebegehäuse und/oder dem oberen Hauptlagerteil und der Hauptspindel ist eine aktive Druckerzeugungseinrichtung vorgesehen. Die Anordnung der aktiven Druckerzeugungseinrichtung zwischen dem oberen Hilfslagerteil und dem Getriebegehäuse ist bevorzugt.

Mit "aktiver Druckerzeugungseinrichtung" ist eine Druckerzeugungseinrichtung gemeint, mittels welcher ein variabler und somit an unterschiedliche Betriebszustände des Kraftdrehkopfes anpassbarer Druck ausübbar ist. Aufgrund der erfindungsgemäßen Weiterbildung des Kraftdrehkopfes ist es somit möglich, die Vorspannung, unter welchem das Axialhauptlager und das Hilfslager betrieben werden, unterschiedlichen Betriebszuständen anzupassen. Die Vorspannung kann beispielsweise abhängig von der Drehzahl oder auf die Hauptspindel wirkende Zug- oder Druckkräfte so eingestellt werden, dass das Axialhauptlager und das Hilfslager zumindest nahezu unter optimalen (Druck)-Bedingungen betrieben wird. Auch werden Toleranzen ohne die Verwendung von Passscheiben oder ähnlichem ausgeglichen. Zudem sind die Wartung und die Montage des Axialhauptlagers vereinfacht, da durch Drucklosstellen der Druckerzugangseinrichtung innerhalb des Getriebegehäuses ein Freiraum geschaffen werden kann. Die aktive Druckerzeugungseinrichtung kann anstatt einer Federanordnung vorgesehen werden. Ein Umrüsten bestehender Kraftdrehköpfe ist daher möglich.

Bei einer bevorzugten Ausführungsform umfasst die aktive Druckerzeugungseinrichtung einen mit hydraulischem oder pneumatischem Druck beaufschlagbaren Kolben. Vorzugsweise ist der Kolben zur Beaufschlagung mit hydraulischem Druck vorgesehen, da dieser dauerhaft zum Antrieb des Motors des Kraftdrehkopfes und/oder anderer Komponenten einer Bohreinrichtung, bei der ein Kraftdruckkopf verwendet wird, zur Verfügung steht.

Der Kolben kann in einer ersten Ausführungsform ein auf das obere Hilfslagerteil wirkender Ringkolben sein. Zu dessen Betätigung ist dann ein einziger, in den Ringraum, in welchem der Ringkolben gelagert ist, mündender Kanal ausreichend.

Bei einer zweiten bevorzugten Ausführungsform ist eine Mehrzahl von zylindrischen, auf das obere Hilfslagerteil wirkenden Kolben vorgesehen. Diese zweite Ausführungsform ist zwar aufgrund der Mehrzahl von Bauteilen und der benötigten Mehrzahl von in die einzelnen Zylinder für jeweils einen Kolben mündenden Kanäle aufwendiger, vorteilhaft ist jedoch, dass eventuelle Schrägstellungen des oberen Hilfslagerteils und/oder des Gehäuses aus einer zueinander exakt parallelen Lage selbsttätig ausgeglichen werden, die im Falle eines Ringkolbens zu einem Verkanten desselben in dem Ringraum führen könnten.

Bei einem dritten Ausführungsbeispiel des erfindungsgemäßen Kraftdrehkopfes umfasst die aktive Druckerzeugungseinrichtung mindestens ein piezoelektrisches Element. Der die Vorspannung des Axialhauptlagers bewirkende Druck kann dann durch Variation der Höhe der an dem piezoelektrischen Element anliegenden Spannung an den jeweiligen Betriebszustand, in dem sich eine den Kraftdrehkopf umfassende Bohreinrichtung befindet, angepasst werden. Eine derartige Ausbildung der Druckerzeugungseinrichtung ist insbesondere dann bevorzugt, wenn der Kraftdrehkopf einen elektrisch betriebenen Antriebsmotor aufweist.

Unabhängig davon, ob die Druckerzeugungseinrichtung hydraulisch, pneumatisch, piezoelektrisch oder auf eine noch andere Weise betrieben wird, ist vorzugsweise eine Drucksteuereinrichtung vorgesehen, mittels welcher der von der aktiven Druckerzeugungseinrichtung erzeugte Druck auch während des Betriebs des Kraftdrehkopfes veränderbar ist. Aufgrund dieser Maßnahme kann die Vorspannung des Hauptaxiallagers an verschiedene Betriebszustände angepasst werden, ohne dass hierzu der Betrieb des Kraftdrehkopfes unterbrochen werden müsste. Unter anderem sind folgende unterschiedliche Betriebszustände denkbar, die eine Veränderung des mittels der Druckerzeugungseinrichtung ausgeübten Drucks zwecks Reduzierung des Verschleißes und Erhöhung der Standzeit des Hauptaxiallagers erfordern:
1. Ausüben eines geringen Drucks zur Erzeugung einer geringen Vorspannung beim Transport und bei der Lagerung des Kraftdrehkopfes. Der Druck wird auf einen möglichst niedrigen Wert eingestellt, der ausreicht, Bewegungen im Hauptaxiallager, die zu Lagerschäden führen könnte, zu vermeiden. Im Falle einer hydraulischen oder pneumatischen Betätigung der Druckerzeugungseinrichtung kann dieser Druck durch einen während des Transports und der Lagerung des Kraftdrehkopfes angeschlossenen Druckspeicher aufrechterhalten werden. Umfasst die Druckerzeugungseinrichtung ein piezoelektrisches Element (oder mehrere), so kann eine Spannungsquelle, beispielsweise mit einem Akkumulator, Verwendung finden.
2. Ein anderer, gegenüber dem Anpressdruck während des Transports oder der Lagerung regelmäßig erhöhter Anpressdruck kann gewählt werden, wenn sich die den erfindungsgemäßen Kraftdrehkopf umfassende Bohreinrichtung im "normalen" Bohrbetrieb befindet. Hiermit ist insbesondere derjenige Bohrbetrieb gemeint, bei welchem trotz des Vorschubs durch Absenken des Kraftdrehkopfes das Bohrgestänge an der Hauptspindel hängt. Der mit der Druckerzeugungseinrichtung bewirkte Druck wird dann über den angelegten hydraulischen oder pneumatischen Druck bzw. die angelegte elektrische Spannung so eingestellt, dass die bei Normalbetrieb auf die Hauptspindel wirkenden dynamischen Belastungen erfahrungsgemäß nicht zu schädlichen Bewegungen im Lager führen.
3. Wird das Niederbringen der Bohrung gehemmt, beispielsweise durch unerwartetes Hartgestein im Erdreich, so kann dies dazu führen, dass das Bohrgestänge nicht mehr an der Hauptspindel hängt, sondern der Kraftdrehkopf über die Hauptspindel Druck auf das Bohrgestänge ausübt. In diesem Falle würde der mit Hilfe der Druckerzeugungseinrichtung erzeugte Druck durch Erhöhung des angelegten hydraulischen oder pneumatischen Drucks bzw. der angelegten Spannung soweit erhöht, dass die mit Hilfe des Axialhilfslagers die Hauptspindel nach unten drückende Druckkraft größer ist als die Druckkraft, mit welcher der Kraftdrehkopf die Hauptspindel nach unten drückt. Schädliches Lagerspiel wird dann weiterhin zuverlässig vermieden.
4. Besondere Druckspitzen zwischen dem Kraftdrehkopf und dem Bohrgestänge sind bei dem sogenannten "Jaringbetrieb" zu erwarten. Diese Betriebsart kann gewählt werden, wenn das Bohrgestänge mit einer sogenannten "Schlagschere" ausgestattet ist. Mit Hilfe dieser Schlagschere kann das untere Ende eines oberen Teils des Bohrgestänges relativ zu einem unteren Teil des Bohrgestänges wahlweise festgeklemmt oder gelöst werden. Der untere und der obere Teil des Bohrgestänges sind dann so ausgestaltet, dass ein Anschlag zwischen diesen beiden Teilen gebildet ist. Für den Fall, dass der untere Teil des Bohrgestänges oder ein an diesem angebrachtes Bohrwerkzeug in der Bohrung verklemmt, kann mit Hilfe des Kraftdrehkopfes das Bohrgestänge unter Zugspannung versetzt werden. Nach Lösen der Schlagschere schnellt das untere Ende des oberen Teils des Bohrgestänges nach oben bis zum Anschlag und übt hierdurch auf den unteren Teil des Bohrgestänges und ein eventuell hieran befestigtes Bohrwerkzeug eine schlagende Kraft auf, durch die das Bohrgestänge oder das Bohrwerkzeug gelöst werden sollen. Hierdurch können in dem Axialhauptlager große dynamische Kräfte entstehen, insbesondere solche, die zu einem Abheben und anschließenden Aufeinanderprallen der Lagerteile führen können. Ein Jaringbetrieb ist daher stets zu vermeiden. Sollte er jedoch aufgrund eines unvorhergesehenen Klemmens unvermeidbar erscheinen, so kann bei dem erfindungsgemäßen Kraftdrehkopf mit Hilfe der Druckerzeugungseinrichtung die maximal zulässige Vorspannung in dem Axialhauptlager erzeugt werden, um die Gefahr einer Beschädigung auf ein technisch mögliches Minimum zu reduzieren.

Neben des Vorsehens einer Drucksteuereinrichtung, mittels welcher die von der aktiven Druckerzeugungseinrichtung erzeugten Drucke an verschiedene Betriebszustände anpassbar sind, ist es ebenfalls möglich, eine Druckregelungseinrichtung vorzusehen, mittels welcher der von der aktiven Druckerzeugungseinrichtung erzeugte Druck in Abhängigkeit der auf die Hauptspindel in Richtung der Drehachse wirkenden Kräfte geregelt wird. Hierzu können in der Hauptspindel, in dem Bohrgestänge und/oder auch in an dem Bohrgestänge vorgesehenen Bohrwerkzeugen Kraftaufnehmer vorgesehen sein, welche die Richtung und Größe der auf die Hauptspindel wirkenden Kräfte erfassen. Auch weitere Betriebsgrößen wie Drehzahl, mit welcher die Hauptspindel betrieben wird, dem Drehmoment, welches mittels der Hauptspindel übertragen wird, können erfasst werden. Eine Regeleinrichtung regelt den von der aktiven Druckerzeugungseinrichtung erzeugten Druck dann vorzugsweise als Funktion der erfassten Werte nach einer vorbestimmten Abhängigkeit in einer Weise, so dass Bewegungen im Axialhauptlager nicht zu erwarten sind, eine übermäßige Druckbelastung der Bauteile des Axialhauptlagers durch eine zu hohe Vorspannung jedoch vermieden wird.

Die Erfindung soll nun anhand der beigefügten Zeichnungen weiter erläutert werden. Es zeigen:
- Fig. 1: einen gattungsgemäßen zum Stand der Technik gehörenden Kraftdrehkopf in einer teilgeschnittenen Seitenansicht (Ansicht senkrecht zur Drehachse der Hauptspindel);
- Fig. 1a: die Einzelheit I in Fig. 1 in einer vergrößerten Darstellung;
- Fig. 2: ein erstes Ausführungsbeispiel eines erfindungsgemäßen Kraftdrehkopfes in einer Fig.1 entsprechenden Darstellung;
- Fig. 2a: die Einzelheit II in Fig. 2 mit einem hydraulischen Blockschaltbild;
- Fig. 2b: eine Einzeldarstellung eines Kolbens der aktiven Druckerzeugungseinrichtung in einer Ansicht gemäß Fig. 2 von oben;
- Fig. 3: ein zweites Ausführungsbeispiel des erfindungsgemäßen Kraftdrehkopfes in einer Fig. 2 entsprechenden Ansicht;
- Fig. 3a: die Einzelheit III in Fig. 3 zusammen mit einem hydraulischen Blockschaltbild;
- Fig. 3b: eine Einzeldarstellung einiger Kolben der aktiven Druckerzeugungseinrichtung in einer Ansicht gemäß Fig. 3 von oben sowie
- Fig. 4: eine vergrößerte Darstellung des hydraulischen Blockschaltbilds.

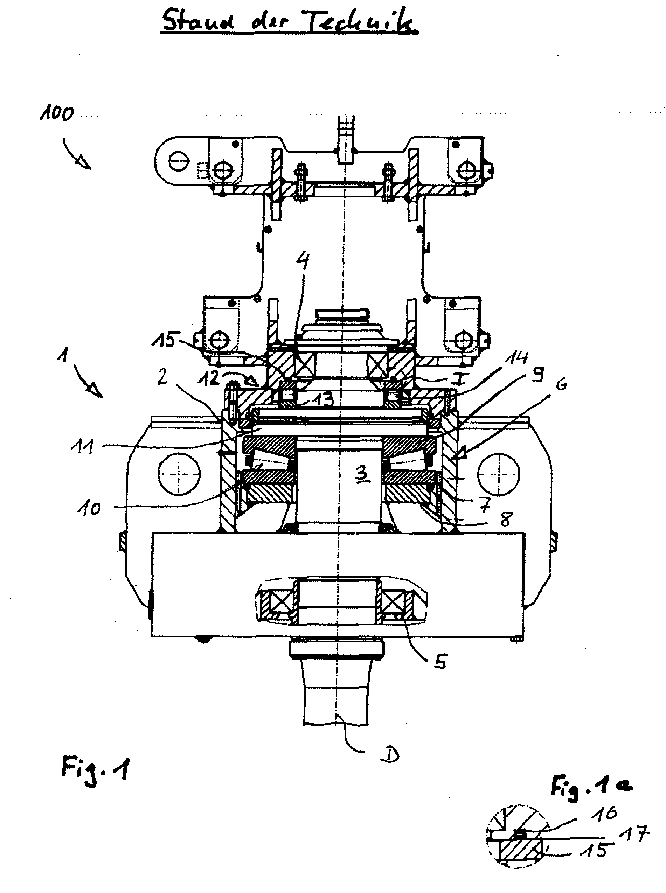

Der in Fig. 1 als Ganzes mit 100 bezeichnete Kraftdrehkopf umfasst eine Getriebeeinheit 1, welche ein Getriebegehäuse 2 aufweist. In dem Getriebegehäuse 2 ist eine Hauptspindel 3 um eine Drehachse D drehbar gelagert. Mit der Hauptspindel 3 ist ein in der Zeichnung nicht erkennbares, da von Getriebegehäuseteilen verdecktes außenverzahntes Stirnrad vorgesehen, an welches ein in der Zeichnung ebenfalls nicht erkennbarer, üblicherweise hydraulisch oder elektrisch betriebener Antriebsmotor angekoppelt ist.

Die Hauptspindel 3 ist mit Hilfe eines oberen Radiallagers 4 und mit Hilfe eines unteren Radiallagers 5 in dem Getriebegehäuse 2 radial gelagert. Zwischen dem oberen und dem unteren Radiallager 4, 5 ist ein Axialhauptlager 6 vorgesehen. Es umfasst ein unteres Hauptlagerteil 7, das auf einem Flansch 8 des Getriebegehäuses 2 aufliegt. Ferner umfasst das Axialhauptlager ein oberes Hauptlagerteil 9, das sich über Kegelrollen 10 auf dem unteren Hauptlagerteil 7 abstützt.

An dem oberen Hauptlagerteil 9 liegt die Hauptspindel 3 mit einem Radialflansch 11 an. Sie wird somit mit Hilfe des Axialhauptlagers gegen eine Verlagerung gemäß Fig. 1 nach unten gesichert.

Das Axialhauptlager 6 ist, wie in Fig. 1 erkennbar, im Vergleich zu den weiteren Lagern groß dimensioniert, da es im Betrieb insbesondere die Gewichtskraft des in der Zeichnung nicht dargestellten, mit der Hauptspindel 3 verbundenen Bohrgestänges abfangen muss.

Um die Hauptspindel 3 auch gegen eventuell während des Betriebs gemäß Fig. 1 von unten nach oben wirkenden Kräfte, oder während einer Lagerung oder während eines Transports nicht in der Betriebsstellung des Kraftdrehkopfes, in axialer Position zu halten, ist ein Axialhilfslager 12 vorgesehen. Es umfasst ein unteres Hilfslagerteil 13, welches sich von oben auf dem Radialflansch 11 abstützt. Über Lagerrollen 14 stützt sich auf dem unteren Hilfslagerteil ein oberes Hilfslagerteil 15 ab. Das obere Hilfslagerteil 15 ist im Getriebegehäuse 2 gelagert. Zwischen dem oberen Hilfslagerteil 15 und dem Getriebegehäuse 2 und/oder zwischen dem unteren Hilfslagerteil 13 und dem Radialflansch 11 können in der Zeichnung nicht erkennbare Distanzscheiben zum Ausgleich von zumindest groben Toleranzen vorgesehen sein.

Um zu verhindern, dass die das Axialhauptlager 6 und das Axialhilfslager 12 umfassende Axiallageranordnung beispielsweise durch kleinere Toleranzen, thermisch bedingte Lenkänderungen, Verschleiß etc. hervorgerufenes Axialspiel aufweist, welches zu einer drastischen Verschleißerhöhung und einer damit verbundenen Standzeitreduzierung führen kann, ist das obere Hilfslagerteil 15 des Axialhilfslagers 12 mit Hilfe einer in Bohrungen 16 angeordneten Federanordnung 17 gemäß Fig. 1 nach unten vorgespannt. Die Hauptspindel 3 wird somit unter Wirkung der mit Hilfe der Federanordnung hervorgerufenen Federkraft nach unten gedrückt.

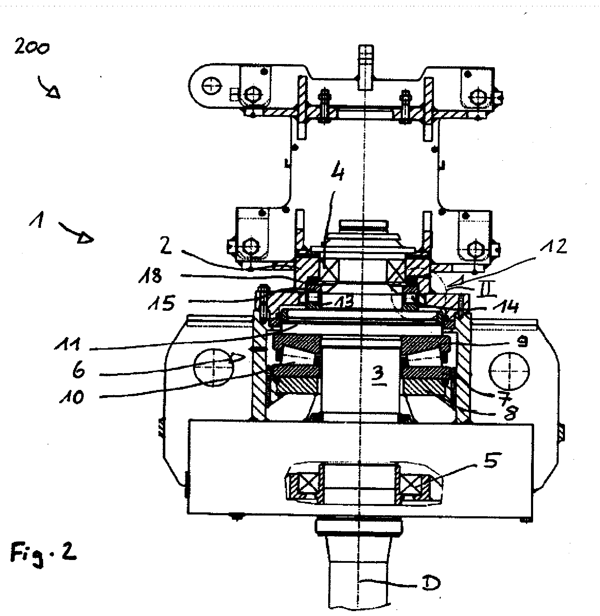

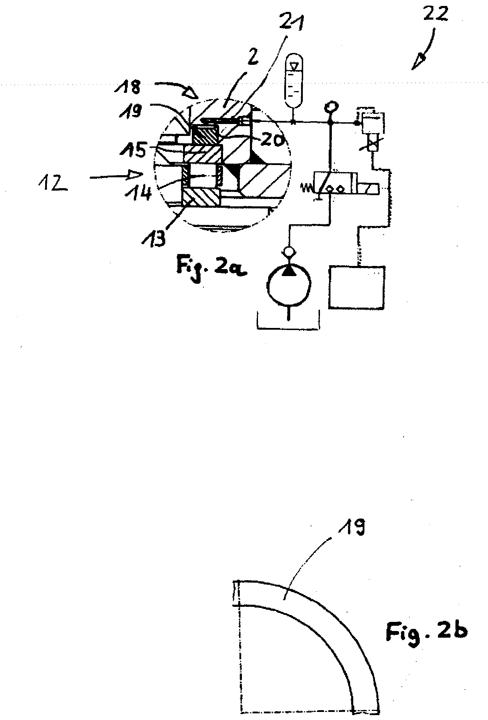

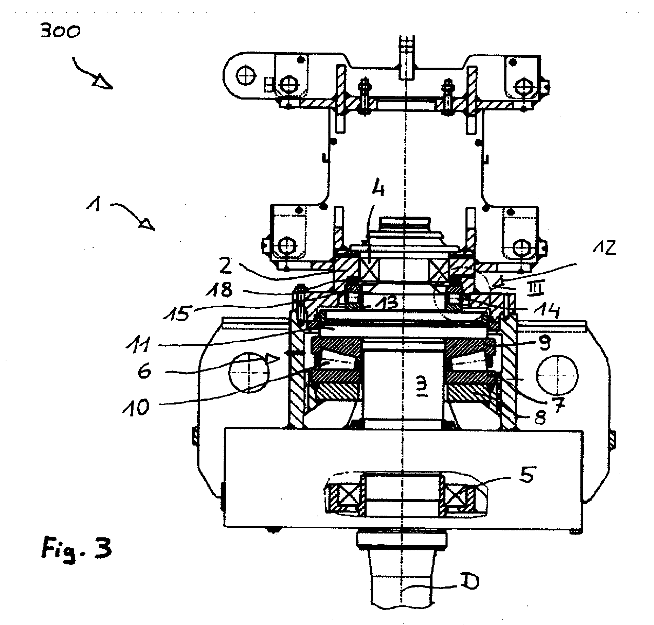

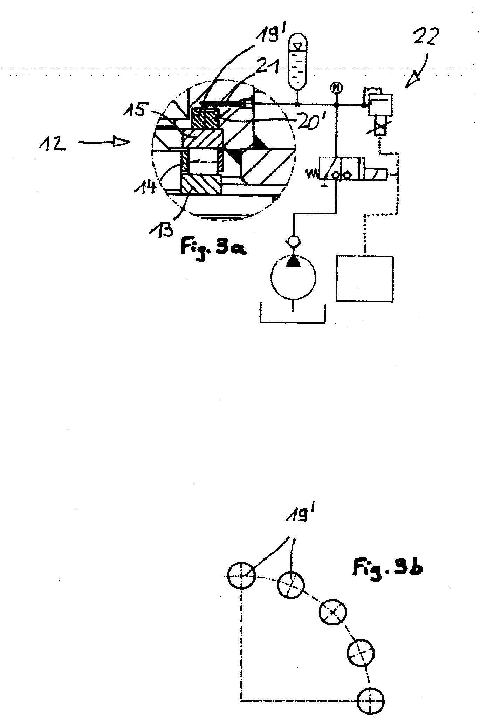

In Fig. 2 und 3 sind zwei Ausführungsbeispiele der erfindungsgemäßen Weiterbildung des anhand von Fig. 1 beschriebenen, gattungsgemäßen Kraftdrehkopfs 100 beschrieben. Zwecks Vermeidung von Wiederholungen sind sich entsprechende Bauteile in Fig. 2 und 3 mit denselben Bezugszeichen wie in Fig. 1 versehen. Auf die Beschreibung von Fig. 1 wird insofern verwiesen.

Der in Fig. 2 dargestellte, und nun als Ganzes mit 200 bezeichnete Kraftdrehkopf umfasst eine aktive Druckerzeugungseinrichtung 18, die zwischen dem oberen Hilfslagerteil 15 und dem Getriebegehäuse 2 anstatt der Federanordnung 17 vorgesehen ist.

Bei dem in Fig. 2, 2a und 2b dargestellten Ausführungsbeispiel umfasst die aktive Druckerzeugungseinrichtung einen Ringkolben 19, der in einer in dem Getriebegehäuse 2 vorgesehenen Ringnut 20 mit dieser seitlich abdichtend gelagert ist.

In den Boden der Ringnut 20 mündet ein Kanal 21, mittels welchem unter Druck stehendes Hydraulikmedium zugeführt und somit der Ringkolben 19 - abhängig von dem Druck, unter dem das zugeführte Hydraulikmedium steht - mit unterschiedlicher Kraft von oben gegen das obere Hilfslagerteil 15 gedrückt werden kann. Der Druck wird vorzugsweise so gewählt, dass das Hauptlager 6 unter möglichst optimalen Bedingungen betrieben wird.

Bei dem in Fig. 3, 3a und 3b dargestellten Ausführungsbeispiel 300 finden anstatt des Ringkolbens 19 eine Mehrzahl von gegen das obere Hilfslagerteil 15 von oben wirkende, zylindrische Kolben 19' Verwendung. Die Kolben 19' sind in Zylindern 20' gelagert, die fluidisch miteinander verbunden sind, so dass alle Kolben 19' mit demselben hydraulischen Druck beaufschlagbar sind.

Anstatt der Kolben 19' können auch andere aktive Druckerzeugungselemente, beispielsweise piezoelektrische Elemente verwendet werden, wenn der Betrieb elektrisch erfolgen soll.

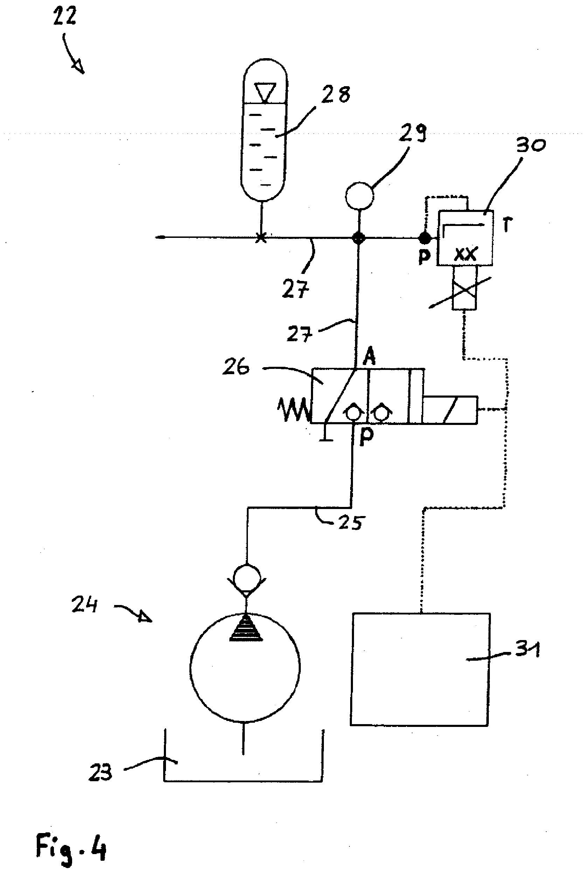

Die Bereitstellung des Hydraulikmediums erfolgt mittels einer Hydraulikeinrichtung 22, deren Aufbau und Funktionsweise nachfolgend anhand von Fig. 4 beschrieben werden soll.

Die Hydraulikeinrichtung 22 umfasst einen Tank 23 für die Hydraulikflüssigkeit sowie eine dem Tank nachgeschaltete Hydraulikpumpe mit Rückschlagventil 24. Der Tank 23 und die Hydraulikpumpe mit Rückschlagventil 24 können zu einem Hydraulikaggregat gehören, welches die für den Betrieb einer Bohranlage, zu welcher der erfindungsgemäße Kraftdrehkopf 200, 300 gehört, notwendige Hydraulikflüssigkeit zur Verfügung stellt.

An die Hydraulikpumpe mit Rückschlagventil 24 ist über eine Hydraulikleitung 25 ein federkraftbeaufschlagtes und elektrisch schaltbares Schaltventil 26 angeschlossen. Das Schaltventil 26 ist an dem Kanal 21 über eine Hydraulikleitung 27 angeschlossen. An die Hydraulikleitung 27 sind ein Hydraulikspeicher mit Gasspannvorrichtung 28, ein Druckmessinstrument 29 sowie ein elektrisch regelbares Überdruckventil 30 angeschlossen.

Das Schaltventil 26 und das Überdruckventil 30 sind elektrisch mit einer Steuer- oder Regeleinrichtung 31 verbunden.

Fig. 4 zeigt die Hydraulikeinrichtung in einem Zustand, in welchem die aktive Druckerzeugungseinrichtung 18 von der Hydraulikpumpe 24 getrennt ist. Hierzu sind die Hydraulikleitungen 25 und 27 durch das Schaltventil 26 abgesperrt. In der Hydraulikleitung 27 liegt der durch den Hydraulikspeicher 28 bestimmte Druck an.

Zur Erzeugung einer Vorspannung in dem Axialhauptlager 6 werden das Schaltventil 26 und das Überdruckventil 30 mittels der Steuer- oder Regeleinrichtung 31 mit einem elektrischen Signal, welches ein Maß für den gewünschten Druckwert ist, welcher mittels der aktiven Druckerzeugungseinrichtung 18 erzeugt werden soll, beaufschlagt. Durch dieses elektrische Signal wird zunächst das Schaltventil 26 umgeschaltet, so dass die Hydraulikleitung 27 mit der Hydraulikleitung 25 verbunden und somit der Kanal 21 mit von der Hydraulikpumpe 24 bereitgestelltem Hydraulikdruck beaufschlagt wird. Ist der dem von der Steuer- oder Regeleinrichtung bereitgestellten elektrischen Signal entsprechende Hydraulikdruck erreicht, öffnet das Überdruckventil 30. Fällt der Druck unter den gewünschten Wert ab, so schließt das Überdruckventil. Hierdurch liegt an der aktiven Druckerzeugungseinrichtung 18 der von der Steuer- oder Regeleinrichtung vorgegebene Druck an, wobei eventuelle Druckschwankungen durch den hydraulischen Speicher 28 geglättet werden. Auch eventuelle Verluste an Hydraulikflüssigkeit durch Leckagen können bis zu einem durch das Volumen des Hydraulikspeichers 28 begrenzten Umfang ausgeglichen werden.

Die Steuer- oder Regeleinrichtung 31 kann entweder für eine manuelle Vorgabe eines gewünschten Druckwerts ausgebildet sein. Es handelt sich dann streng genommen um eine Steuereinrichtung. Es ist jedoch ebenfalls möglich, die Steuer- oder Regeleinrichtung 31 als Regeleinrichtung im engeren Sinne auszubilden. Sie umfasst dann einen zusätzlichen Signaleingang, an welchen über geeignete Sensoren aufgenommene, beispielsweise auf die Hauptspindel 3 in Richtung der Drehachse wirkende Kraftwerte anliegen. Mit Hilfe eines in der Regeleinrichtung gespeicherten Algorithmus werden dann das Schaltventil 26 und das Überdruckventil 30 so betätigt, dass in der Hydraulikleitung 27 derjenige Druck ansteht, welcher zur Erzeugung der für den jeweiligen Betriebszustand optimalen Vorspannung des Axialhauptlagers 6 erforderlich ist.

Sind anstatt des - oder der Kolben 19, 19' piezoelektrische Elemente vorgesehen, so kann der Ausgang der Steuer- oder Regeleinrichtung direkt mit den piezoelektrischen Elementen verbunden sein, sofern die Steuer- oder Regeleinrichtung hinsichtlich der am Ausgang erzeugten elektrischen Werte an die piezoelektrischen Elemente angepasst sind.

### Bezugszeichenliste:

- 100,200,300: Kraftdrehkopf
- 1: Getriebeeinheit
- 2: Getriebegehäuse
- 3: Hauptspindel
- 4: oberes Radiallager
- 5: unteres Radiallager
- 6: Axialhauptlager
- 7: unterer Hauptlagerteil
- 8: Flansch
- 9: oberer Hauptlagerteil
- 10: Kegelrollen
- 11: Radialflansch
- 12: Axialhilfslager
- 13: unteres Hilfslagerteil
- 14: Lagerrollen
- 15: oberes Hilfslagerteil
- 16: Bohrungen
- 17: Tellerfederanordnung
- 18: aktive Druckerzeugungseinrichtung
- 19: Ringkolben
- 19': Kolben
- 20: Ringnut
- 20': Zylinder
- 21: Kanal
- 22: Hydraulikeinrichtung
- 23: Tank
- 24: Hydraulikpumpenrückschlagventil
- 25: Hydraulikleitung
- 26: Schaltventil
- 27: Hydraulikleitung
- 28: Hydraulikspeicher
- 29: Druckmessinstrument
- 30: Überdruckventil
- 31: Steuer- oder Regeleinrichtung
- D: Drehachse

## Patentansprüche

1. Kraftdrehkopf (200, 300) für ein Bohrgestänge,
mit einer ein Getriebegehäuse (2) aufweisenden Getriebeeinheit (1),
mit einer in der Getriebeeinheit (1) um eine Drehachse (D) drehbar gelagerten Hauptspindel (3), an die das Bohrgestänge ankoppelbar ist,
wobei die Getriebeeinheit (1) ein Axialhauptlager (6) mit einem unteren Hauptlagerteil (7) und einem relativ zum unteren Hauptlagerteil (7) um die Drehachse (D) drehbaren oberen Hauptlagerteil (9) umfasst,
wobei die Hauptspindel (3) an dem oberen Hauptlagerteil (9) und das untere Hauptlagerteil (7) an dem Getriebegehäuse (2) mittelbar oder unmittelbar anliegen,
und wobei die Getriebeeinheit (1) ein Axialhilfslager (12) umfasst,
**dadurch gekennzeichnet,**
**dass** das Axialhilfslager (12) ein unteres Hilfslagerteil (13) und ein relativ zum unteren Hilfslagerteil (13) um die Drehachse (D) drehbares oberes Hilfslagerteil (15) aufweist, wobei das untere Hilfslagerteil (13) an der Hauptspindel (3) und das obere Hilfslagerteil (15) mittelbar oder unmittelbar an dem Getriebegehäuse (2) anliegen, und
**dass** zwischen dem oberen Hilfslagerteil (15) und dem Getriebegehäuse (2) und/oder zwischen dem unteren Hilfslagerteil (13) und der Hauptspindel (3) und/oder zwischen dem unteren Hauptlagerteil (7) und dem Getriebegehäuse (2) und/oder dem oberen Hauptlagerteil (9) und der Hauptspindel (3) eine aktive Druckerzeugungseinrichtung (18) vorgesehen ist.

2. Kraftdrehkopf nach Anspruch 1, **dadurch gekennzeichnet, dass** die aktive Druckerzeugungseinrichtung (18) einen mit hydraulischem oder pneumatischem Druck beaufschlagbaren Kolben (19, 19') umfasst.

3. Kraftdrehkopf nach Anspruch 2, **dadurch gekennzeichnet, dass** der Kolben ein auf das obere und/oder untere Hilfslagerteil (15, 13) und/oder auf das untere und/oder das obere Hauptlagerteil (7, 9) wirkender Ringkolben (19) ist.

4. Kraftdrehkopf nach Anspruch 2, **dadurch gekennzeichnet, dass** eine Mehrzahl von zylindrischen, auf das obere und/oder untere Hilfslagerteil (15, 13) und/oder auf das untere und/oder das obere Hauptlagerteil (7, 9) wirkenden Kolben (19') vorgesehen sind.

5. Kraftdrehkopf nach Anspruch 1, **dadurch gekennzeichnet, dass** die aktive Druckerzeugungseinrichtung (18) mindestens ein piezoelektrisches Element umfasst.

6. Kraftdrehkopf nach Anspruch 1, **dadurch gekennzeichnet, dass** die aktive Druckerzeugungseinrichtung eine mechanisch wirkende Spindel umfasst.

7. Kraftdrehkopf nach einem der Ansprüche 1 bis 6, **dadurch gekennzeichnet, dass** eine Drucksteuereinrichtung vorgesehen ist, mittels welcher der von der aktiven Druckerzeugungseinrichtung (18) erzeugte Druck auch während des Betriebs des Kraftdrehkopfes veränderbar ist.

8. Kraftdrehkopf nach einem der Ansprüche 1 bis 6, **dadurch gekennzeichnet, dass** eine Druckregelungseinrichtung vorgesehen ist, mittels welcher der von der aktiven Druckerzeugungseinrichtung (18) erzeugte Druck in Abhängigkeit von Betriebsgrößen, wie der auf die Hauptspindel (3) in Richtung der Drehachse (D) wirkenden Kraft, der Drehzahl, mit welcher die Hauptspindel betrieben wird, dem Drehmoment, welches mittels der Hauptspindel übertragen wird, regelbar oder steuerbar ist.

9. Verfahren zum Betrieb eines Kraftdrehkopfes, der eine mittels einer Axiallageranordnung gelagerte Hauptspindel umfasst, **dadurch gekennzeichnet, dass** die Axiallageranordnung mit einem in axialer Richtung wirkenden Druck beaufschlagt wird, der in Abhängigkeit von Betriebsgrößen wie der auf die Hauptspindel in Richtung ihrer Drehachse wirkenden Kraft, der Drehzahl, mit welcher die Hauptspindel betrieben wird, dem Drehmoment, welches mittels der Hautspindel übertragen wird, gesteuert oder geregelt wird.

## Claims

1. Top drive (200, 300) for a drill pipe,
comprising a transmission unit (1) having a transmission case (2),
comprising a main spindle (3) which is rotatably mounted in the transmission unit (1) about an axis of rotation (D) and to which the drill pipe can be coupled,
the transmission unit (1) comprising an axial main bearing (6) having a lower main bearing part (7) and an upper main bearing part (9) that can be rotated about the axis of rotation (D) relative to the lower main bearing part (7),
the main spindle (3) directly or indirectly abutting the upper main bearing part (9) and the lower main bearing part (7) directly or indirectly abutting the transmission case (2),
and the transmission unit (1) comprising an axial auxiliary bearing (12),
**characterized in that**
the axial auxiliary bearing (12) comprises a lower auxiliary bearing part (13) and an upper auxiliary part (15) that can be rotated about the axis of rotation (D) relative to the lower auxiliary bearing part (13), the lower auxiliary bearing part (13) directly or indirectly abutting the main spindle (3) and the upper auxiliary bearing part (15) directly or indirectly abutting the transmission case (2), and
**in that** an active pressure generating means (18) is provided between the upper auxiliary bearing part (15) and the transmission case (2) and/or between the lower auxiliary part (13) and the main spindle (3) and/or between the lower main bearing part (7) and the transmission case (2) and/or the upper main bearing part (9) and the main spindle (3).

2. Top drive according to claim 1, **characterized in that** the active pressure generating means (18) comprises a piston (19, 19') that can be subjected to hydraulic or pneumatic pressure.

3. Top drive according to claim 2, **characterized in that** the piston is an annular piston (19) that acts on the upper and/or lower auxiliary bearing part (15, 13) and/or on the lower and/or upper main bearing part (7, 9).

4. Top drive according to claim 2, **characterized in that** a plurality of cylindrical pistons (19') that act on the upper and/or lower auxiliary bearing part (15, 13) and/or on the upper and/or lower main bearing part (7, 9) are provided.

5. Top drive according to claim 1, **characterized in that** the active pressure generating means (18) comprises at least one piezoelectric element.

6. Top drive according to claim 1, **characterized in that** the active pressure generating means comprises a mechanical spindle.

7. Top drive according to any of claims 1 to 6, **characterized in that** an open-loop pressure controller is provided by means of which the pressure generated by the active pressure generating means (18) can also be changed during operation of the top drive.

8. Top drive according to any of claims 1 to 6, **characterized in that** a closed-loop pressure controller is provided by means of which the pressure generated by the active pressure generating means (18) can be controlled depending on operating variables such as the force acting on the main spindle (3) towards the axis of rotation (D), the rotational speed at which the main spindle is operated, or the torque that is transmitted by means of the main spindle.

9. Method for operating a top drive that comprises a main spindle mounted by means of an axial bearing arrangement, **characterized in that** the axial bearing arrangement is subjected to a pressure acting in the axial direction, which pressure is controlled depending on operating variables such as the force acting on the main spindle towards the axis of rotation thereof, the rotational speed at which the main spindle is operated, or the torque that is transmitted by means of the main spindle.

## Revendications

1. Tête rotative d'entraînement (200, 300) destinée à un train de tiges, comprenant une unité de transmission (1) comportant une boîte d'engrenages (2), un arbre moteur (3) qui est monté à rotation sur un axe de rotation (D) dans l'unité de transmission (1) et auquel le train de tiges peut être accouplé,
l'unité de transmission (1) comprenant un palier axial principal (6) muni d'une partie de palier principal inférieure (7) et d'une partie de palier principal supérieure (9) pouvant tourner sur un axe de rotation (D) par rapport à la partie de palier principal inférieure (7),
l'arbre moteur (3) étant en appui direct ou indirect sur la partie de palier principal supérieure (9) et la partie de palier principal inférieure (7) étant en appui direct ou indirect sur la boîte d'engrenages (2),
et l'unité de transmission (1) comprenant un palier axial auxiliaire (12),
**caractérisée en ce que** le palier axial auxiliaire (12) comporte une partie de palier auxiliaire inférieure (13) et une partie de palier auxiliaire supérieure (15) pouvant tourner sur l'axe de rotation (D) par rapport à la partie de palier auxiliaire inférieure (13),
la partie de palier auxiliaire inférieure (13) étant en appui direct ou indirect sur l'arbre moteur (3) et la partie de palier auxiliaire supérieure (15) étant en appui direct ou indirect sur la boîte d'engrenages (2), et
**en ce qu'**entre la partie de palier auxiliaire supérieure (15) et la boîte d'engrenages (2) et/ou entre la partie de palier auxiliaire inférieure (13) et l'arbre moteur (3) et/ou entre la partie de palier principal inférieure (7) et la boîte d'engrenages (2) et/ou entre la partie de palier principal supérieure (9) et l'arbre moteur (3) est prévu un dispositif de génération de pression (18).

2. Tête rotative d'entraînement selon la revendication 1, **caractérisée en ce que** le dispositif de génération de pression actif (18) comprend un piston (19, 19') pouvant être sollicité par pression hydraulique ou pneumatique.

3. Tête rotative d'entraînement selon la revendication 2, **caractérisée en ce que** le piston est un piston annulaire (19) agissant sur la partie de palier auxiliaire supérieure et/ou inférieure (15, 13) et/ou sur la partie de palier principal supérieure et/ou inférieure (7, 9).

4. Tête rotative d'entraînement selon la revendication 2, **caractérisée en ce que** sont prévus plusieurs pistons (19') cylindriques agissant sur la partie de palier auxiliaire supérieure et/ou inférieure (15, 13) et/ou sur la partie de palier principal supérieure et/ou inférieure (7, 9).

5. Tête rotative d'entraînement selon la revendication 1, **caractérisée en ce que** le dispositif de génération de pression actif (18) comprend au moins un élément piézoélectrique.

6. Tête rotative d'entraînement selon la revendication 1, **caractérisée en ce que** le dispositif de génération de pression actif comprend un arbre à action mécanique.

7. Tête rotative d'entraînement selon une des revendications 1 à 6, **caractérisée en ce qu'**un dispositif de commande de pression est prévu qui permet de faire varier la pression générée par le dispositif de génération de pression actif (18) même pendant le fonctionnement de la tête rotative d'entraînement.

8. Tête rotative d'entraînement selon une des revendications 1 à 6, **caractérisée en ce qu'**un dispositif de commande de pression est prévu qui permet de régler ou de commander la pression générée par le dispositif de génération de pression actif (18) en fonction de paramètres de fonctionnement, comme la force s'exerçant sur l'arbre moteur (3) dans la direction de l'axe de rotation (D), la vitesse de rotation avec laquelle l'arbre moteur est actionné, le couple transmis au moyen de l'arbre moteur.

9. Procédé d'actionnement d'une tête rotative d'entraînement qui comprend un arbre moteur monté au moyen d'un agencement de palier axial, **caractérisé en ce que** l'agencement de palier axial peut être sollicité par une pression agissant en direction axiale, qui peut être réglée ou commandée en fonction de paramètres de fonctionnement, comme la force s'exerçant sur l'arbre moteur dans la direction de l'axe de rotation, la vitesse de rotation avec laquelle l'arbre moteur est actionné, le couple transmis au moyen de l'arbre moteur.
